# EUROPÄISCHE PATENTSCHRIFT

(11) **EP 1 877 724 B1**
(45) Veröffentlichungstag und Bekanntmachung des Hinweises auf die Patenterteilung: **18.08.2010**
(21) Anmeldenummer: 06724733.8
(22) Anmeldetag: 05.05.2006
(51) Int. Cl.: G01B 7/06, G07D 7/16

(54) **EINRICHTUNG ZUM FESTSTELLEN VON DICKEN UND DICKENVARIATIONEN**
ARRANGEMENT FOR DETERMINING THICKNESSES AND THICKNESS VARIATIONS
DISPOSITIF DE CONTROLE D'EPAISSEURS ET DE VARIATIONS D'EPAISSEURS

(30) Priorität: 06.05.2005 EP 05405340
(43) Veröffentlichungstag der Anmeldung: 16.01.2008
(73) Patentinhaber: BEB Industrie-Elektronik AG, 3414 Oberburg (CH)
(72) Erfinder: SCHLETTI, Reto, CH-3400 Burgdorf (CH); MANNHART, Jevgenij, CH-6330 Cham (CH)
(74) Vertreter: Lucht, Silvia
(86) Internationale Anmeldenummer: PCT/EP2006/004232
(87) Internationale Veröffentlichungsnummer: WO 2006/119926

(56) Entgegenhaltungen:
- WO-A-92/11505
- US-A- 4 729 556
- US-A1- 2002 110 396
- US-A1- 2003 141 653

## Beschreibung

Die Erfindung betrifft das Gebiet der Verarbeitung flacher Gegenstände, insbesondere Wertscheine oder Dokumente wie beispielsweise Banknoten, Schecks, Aktien, Papieren mit Sicherheitsaufdruck, Urkunden, Eintrittskarten oder Fahrkarten, Gutscheinen, aber auch von Kredit- oder Bankomatkarten und/oder von Identifikations- oder Zugangskarten. Sie betrifft insbesondere eine Einrichtung zum Messen einer Dicke oder zum Feststellen einer Dickenvariation eines Gegenstandes und eine Vorrichtung, die mit einer solchen Einrichtung versehen ist. In Vorrichtungen zum Verarbeiten von Banknoten und Schecks dienen solche Einrichtungen oft als Tape-Sensoren, also als Einrichtungen zum Feststellen, ob eine Banknote/ein Scheck mit einem Klebstreifen versehen wurde und daher bspw. nicht mehr in Umlauf gebracht werden soll. Eine weitere mögliche Verwendung ist das Erkennen von Mehrfacheinzügen.

Mit "Verarbeitung" sind jegliche Verfahren gemeint, denen wertpapierähnliche Gegenstände unterworfen werden können, also beispielsweise Lesen, Erkennen, Kontrollieren, Verifizieren, Prüfen, Zählen, (Aus-)sortieren, Transportieren und/oder Stapeln, etc.

Eine Einrichtung zum Feststellen einer durch einen Klebstreifen verursachten Dickenvariation muss einerseits aufgrund der geringen Dicke von typischen erhältlichen Klebstreifen relativ hochauflösend Dickenvariationen feststellen. Andererseits ist auch eine laterale Auflösung wünschenswert, um eine von einem Klebestreifen verursachte Dickenvariation beispielsweise von mehreren gleichzeitig eingezogenen Banknoten zu unterscheiden.

Es ist bekannt, wertpapierähnliche Gegenstände zwischen Walzen zu transportieren, von denen die eine relativ zur andern bewegbar ist und die durch Federn gegeneinander gedrückt werden. Dabei ist die Auslenkung der Walzen relativ zueinander ein Mass für die Dicke des dazwischen transportierten Gegenstandes.

Aus der Druckschrift US 2003/141653 A1 ist eine Einrichtung zur Feststellung einer Dicke oder Dickenvariation eines flachen Gegenstands bekannt, welche ein erstes Führungsmittel, mehrere zweite Führungsmittel, je ein mit einem zweiten Führungsmittel verbundenes elektrisch leitfähiges Element und mehrere Spulen aufweist. Dabei wird eine Auslenkung eines zweiten Führungselements auf das zugehörige elektrisch leitfähige Element übertragen. Dadurch ändert sich der Abstand zwischen der Spule und dem elektrisch leitfähigen Element. Diese Abstandsänderung wird durch eine Auswertung nachgewiesen.

Aus der Druckschrift US 2002/110396 A1 ist eine Einrichtung zur Feststellung einer Dicke oder Dickenvariation eines flachen Gegenstands bekannt, bei der eine Auslenkung eines zweiten Führungselements entweder zu einer Abstandsänderung zwischen dem Führungselement und einer Spule oder zu einer Abstandsänderung zwischen einem an dem Führungselement angeordneten elektrisch leitfähigen Element und einer Spule führt. Diese Abstandsänderung wird durch eine Auswertung nachgewiesen.

Aus der Druckschrift US A 4 729 556 ist eine Vorrichtung zur Bestimmung der Dicke einer Banknote bekannt, bei welcher ein Führungsmittel mit einem Potentiometer verbunden ist, so dass eine Auslenkung des Führungsmittels auf das Potentiometer übertragen wird.

Aus der WO 92/11505 A ist eine Vorrichtung zur Bestimmung der Eigenschaften flacher Gegenstände in z-Richtung bekannt, bei der die Kompressibilität eines flachen Gegenstands unter Druckeinwirkung bestimmt und ausgewertet wird. Die Vorrichtung weist keine Spulen und keine mit den Spulen wechselwirkenden elektrisch leitfähigen Elemente auf.

Aufgabe der Erfindung ist es, eine Einrichtung zum Feststellen von Dicken und Dickenvariationen von flachen Gegenständen, insbesondere von Wertscheinen zu schaffen, welche eine genügend grosse Empfindlichkeit auch für durch Klebstreifen verursachte Dickenvariationen aufweist. Die Einrichtung soll vom Prinzip her einfach und in der Herstellung möglichst kostengünstig sein. Zudem soll sie vorzugsweise das Feststellen von Variationen der Dicke eines flachen Gegenstandes mindestens teilweise mit einer lateralen Auflösung auf einer gesamten Breite des Gegenstandes ermöglichen.

Die Aufgabe wird gelöst durch eine Einrichtung, wie sie in den Patentansprüchen definiert ist. Ebenfalls Gegenstand der Erfindung ist eine Vorrichtung, die mit einem als solche Einrichtung ausgebildeten Tape- oder Mehrfacheinzugssensor versehen ist.

Die erfindungsgemässe Einrichtung zeichnet sich im wesentlichen dadurch aus, dass bei Anwesenheit eines flachen Gegenstands die Auslenkung eines oder mehrerer zweiter Führungselemente relativ zu einem gegenüberliegenden ersten Führungselement über ein elektrisch leitfähiges Element durch mindestens eine flache Luftspule erfasst wird, die ein von einem elektrisch leitfähigen Element beeinflussbares magnetisches Wechselfeld erzeugt. Die Auslenkung der zweiten Führungselemente wird durch die Anwesenheit des flachen Gegenstandes zwischen den Führungselementen hervorgerufen. Sie wird verstärkt, wenn statt eines Gegenstands mehrere Gegenstände zwischen den Führungselementen anwesend sind oder wenn der Gegenstand hinsichtlich seiner Dicke variiert. Diese Dickenvariation wird beispielsweise durch einen zusätzlichen Klebestreifen auf dem Gegenstand hervorgerufen. Das Wechselfeld bewirkt im elektrisch leitfähigen, also meist metallischen jedoch nicht ferromagnetischen Material des leitfähigen Elements Wirbelströme. Diese beeinflussen ihrerseits das Wechselfeld. Wenn die Flachspulen gemäß einer vorteilhaften Ausgestaltung der Erfindung Teil eines LC-Schwingkreises sind, werden Resonanzfrequenz und Dämpfung dieses Schwingkreises beeinflusst. Bei konstanter Anregungsfrequenz ändert sich die Schwingungsamplitude.

In bevorzugter Weise sind die zweiten Führungselemente auf einer Linie angeordnet, welche senkrecht zur Transportrichtung der Gegenstände verläuft.

In bevorzugter Weise handelt es sich bei den Führungselementen um Transportwalzen.

Die Einrichtung ist erfindungsgemäß so ausgebildet, dass eine Auslenkung der Führungselemente gegeneinander eine Verschiebung des oder der elektrisch leitfähigen Elemente entlang einer durch die Flachspule definierten Ebene bewirkt. Dann ändert sich durch die Auslenkung die Abdeckung einer oder mehrerer Flachspule durch das elektrisch leitfähige Element. Geometrie und Anordnung der Spule und des elektrisch leitfähigen Elements sind beispielsweise derart, dass die Abdeckung einer Spule sich um so mehr vergrössert, je weiter ein Führungselement ausgelenkt wird. Zusätzlich kann auch eine Bewegung des leitfähigen Elements entlang einer Richtung senkrecht zu der Ebene der Flachspule bewirkt werden. Die Dämpfungseigenschaften des LC-Schwingkreises hängen sehr empfindlich vom Abstand von einem elektrisch leitfähigem Element zur zugehörigen Flachspule ab.

Ein elektrisch leitfähiges Element, welches aus einem elektrisch leitfähigen Material besteht, kann durch die Auslenkung eines Führungselements, zum Beispiel über ein entsprechend gestaltetes Übertragungsmittel, das als Hebel wirken kann, derart relativ zur Flachspule bewegt werden, dass sich
(a) die Abdeckung, oder
(b) der Abstand und die Abdeckung der Spule
ändert. In letzterem Fall sind Spule und leitfähiges Element dabei bevorzugt so angeordnet, dass eine erhöhte Abdeckung einer Spule mit einer Abstandsverkleinerung einhergeht.

Nach einer vorteilhaften Ausgestaltung der Erfindung ist ein als Hebel wirkendes Übertragungsmittel so ausgebildet und angeordnet, dass eine Auslenkung des Führungselements vervielfacht wird, was die Messempfindlichkeit erhöht.

Der Abstand zwischen einem elektrisch leitfähigen Element und einer Flachspule wird derart vorgegeben, dass eine genügend grosse Empfindlichkeit des Wechselfeldes vorhanden ist. Er beträgt beispielsweise nicht mehr als 7 mm, vorzugsweise nicht mehr als 5 mm, besonders bevorzugt höchstens 3 mm.

Nach einer vorteilhaften Ausgestaltung der Erfindung ist eine Flachspule durch Leiterbahnen einer gedruckten Schaltung ausgebildet, was sehr kostengünstig ist. Diese befindet sich bevorzugt auf einer Leiterplatte. Die Anregungs- und Auswertungselektronik für die Flachspule kann auf derselben Leiterplatte vorhanden sein, was auch fertigungstechnisch sehr vorteilhaft ist. Das Zur-Verfügungstellen eines elektrisch leitfähigen, insbesondere metallischen, Materials in oder an den zweiten Führungselementen oder - oft praktischer - an einem mit den zweiten Führungselementen verbundenen Übertragungsmittel, ist sehr einfach zu bewerkstelligen. Beispielsweise können die zweiten Führungselemente oder die Übertragungsmittel als Ganzes metallisch sein, es kann ein Metallelement, bspw. als Metallplättchen, am Übertragungsmittel befestigt sein, oder dieses kann in einem peripheren Bereich einen Abschnitt aus einem elektrisch leitfähigem Material aufweisen. Das Material kann auf beliebige Weise befestigt oder auch aufgedampft etc. sein.

In einer bevorzugten Ausführungsform sind mehrere erste Führungselemente nebeneinander angeordnet und bilden zusammen mit je einem zweiten Führungselement ein Paar. Die Reihe der Paare verläuft bevorzugt quer zur Förderrichtung der flachen Gegenstände. Darüber hinaus können mehrere erste Führungselemente vorgesehen sein, wobei jeweils zwei oder mehr zweite Führungselemente einem ersten Führungselement zugeordnet sind.

Um ein Ansteuern und Auswerten mehrerer Luftspulen und damit auch den Aufbau der Einrichtung mit mehreren Spulen möglichst einfach und günstig gestalten zu können, wird bevorzugt nur ein einziger Detektor, unter Umständen ein Synchrondetektor verwendet. Die Signale der Luftspulen werden dazu über eine Multiplexeinheit geführt.

In einer bevorzugten Ausführungsform der Einrichtung sind einem Element aus einem elektrisch leitfähigen Material mindestens zwei Flachspulen zugeordnet. Diese zwei Flachspulen liegen nebeneinander und haben eine qualitativ gegenläufige Abhängigkeit ihrer Breite, also der lateralen Ausdehnung von der Position entlang der Bewegungsrichtung des leitfähigen Materials. Ein Differenzsignal der beiden Flachspulen wird zur Messung verwendet. Es können beispielsweise zwei nebeneinander angeordnete Dreieckspulen vorhanden sein, die gleich gross sind und sich zu einem Rechteck ergänzen.

Eine einzelne Flachspule kann auch aus mehreren Teilspulen bestehen, die nicht in derselben Ebene angeordnet, sondern bspw. auf der Vor- und Rückseite einer Leiterplatte ausgebildet sind.

Nach einer weiteren vorteilhaften Ausgestaltung der Erfindung sind die Flachspulen so verschaltet, dass je eine Flachspule und ein kapazitives Element sowie eventuell weitere Elemente zusammen einen LC-Schwingkreis bilden. Vorzugsweise wird der Schwingkreis nicht in Resonanz angeregt, sondern an einer Flanke, beispielsweise der niederfrequenten Flanke, zum Beispiel bei einer Frequenz von höchstens 98% oder höchstens 95% der Resonanzfrequenz. Die ideale Anregungsfrequenz ist abhängig von der Güte Q.

Gemäss einer bevorzugten Ausführungsform ist die Anregungsfrequenz der Flachspule so hoch, dass das Produkt der Frequenz und der Spuleninduktivität viel grösser ist als der ohmsche Widerstand. Der Imaginärteil der komplexen Impedanz der Spule ist dabei viel grösser als der Realteil, beispielsweise mindestens 100 mal grösser. Im Gegensatz zum ohmschen Widerstand ist die Induktivität nur von der Geometrie abhängig und daher temperaturunabhängig. Damit ist auch die ganze Messmethode temperaturunabhängig. Wenn zusätzlich noch frequenzselektiv gemessen wird, erreicht man eine weitgehende Unabhängigkeit von jeglichen äusseren Einflüssen. Gemäss einer besonders bevorzugten Ausführungsform beträgt die Anregungsfrequenz zwischen 1 MHz und 10 MHz.

Im Folgenden werden Ausführungsbeispiele der Erfindung anhand von schematischen Figuren genauer beschrieben. Es zeigen:
- Figur 1: eine Seitenansicht eines ersten Ausführungsbeispiels der erfindungsgemässen Einrichtung,
- Figur 2: ein vereinfachtes Schaltschema für eine Flachspule,
- Figur 3: eine schematisch dargestellte Resonanzkurve des LC-Schwingkreises,
- Figur 4: ein ebenfalls stark vereinfachtes Schaltschema mit Verwendung eines Synchron-Detektors,
- Figur 5: ein Schaltschema zum Betreiben der Einrichtung in einem Multiplexverfahren,
- Figur 6: das Funktionsprinzip einer Anordnung mit einer einzigen Flachspule pro zweitem Führungselement,
- Figur 7: das Funktionsprinzip einer Anordnung mit zwei Dreieckspulen,
- Figur 8: ein zweites Ausführungsbeispiel der Erfindung, und
- Figur 9: ein drittes Ausführungsbeispiel der Erfindung.

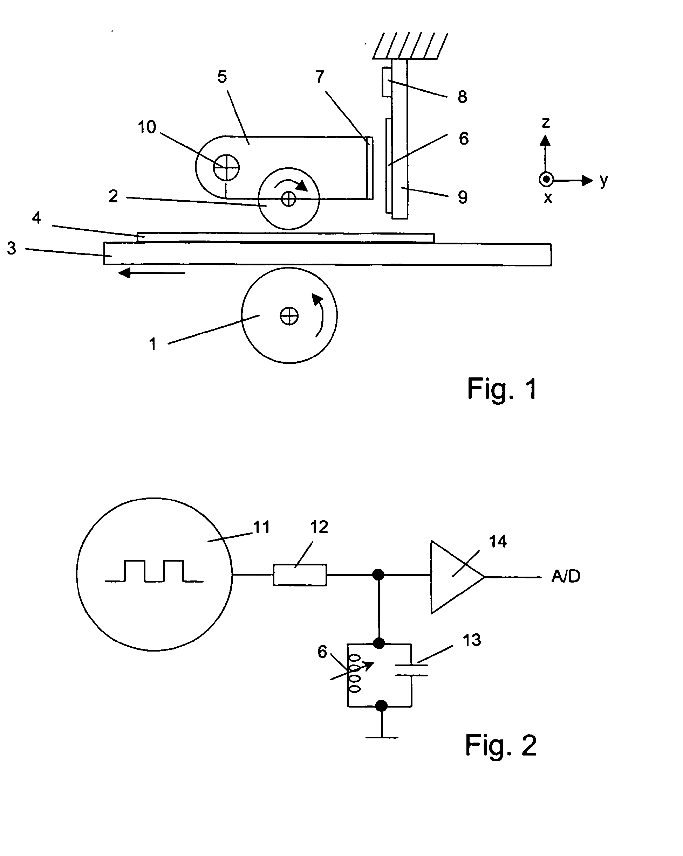

In der in **Figur 1** gezeigten Einrichtung wird zwischen einem ersten Führungselement 1 und einem zweiten Führungselement 2 ein flacher Gegenstand 3, z. B. eine Banknote, transportiert. Bei dem ersten Führungselement 1 handelt es sich um eine Transportwalze, welche sich über die gesamte Breite der Einrichtung erstreckt. Neben dem zweiten Führungselement 2 sind weitere, in der Zeichnung nicht erkennbare zweite Führungselemente über die Breite der Einrichtung angeordnet. Die zweiten Führungselemente 2 sind derart beweglich angeordnet, dass sie relativ zum ersten Führungselement 1, hier in z-Richtung, ausgelenkt werden, sobald sich der flache Gegenstand 3 in y-Richtung zwischen die Führungselemente schiebt. Die zweiten Führungselemente 2 werden weiter ausgelenkt, wenn sich die Dicke der Banknote ändert. Eine solche Dickenvariation kann, wie in Figur 1 gezeigt, durch ein auf der Banknote angebrachtes Stück Klebestreifen 4 verursacht werden. Da sich der Klebestreifen 4 nicht über die gesamte Breite der Banknote erstreckt, werden nicht alle sondern nur ein Teil der zweiten Führungselemente 2 durch den Klebestreifen 4 ausgelenkt. Die Auslenkungen der zweiten Führungselemente 2 werden über je ein mit den zweiten Führungselementen 2 gekoppeltes, gleichzeitig als Halterung der zweiten Führungselemente 2 dienendes Übertragungsmittel 5 in eine Bewegung relativ zu einer Oberfläche einer Leiterplatte 9 und damit relativ zu mehreren auf der Leiterplattenoberfläche durch Leiterbahnen gebildeten Flachspulen 6 übertragen. Dabei ist jedem zweiten Führungselement 2 eine Flachspule zugeordnet. Bei einer Auslenkung eines zweiten Führungselements 2 dreht sich das zugehörige Übertragungsmittel 5 um einen, einen Fixpunkt definierenden, Drehzapfen 10. Das Übertragungsmittel 5 weist ein elektrisch leitfähiges Element 7, z. B. ein am Übertragungsmittel angebrachtes Metallplättchen, auf, welches der Flachspule 6 gegenüberliegend angeordnet ist. Das elektrisch leitfähige Element muss nicht als separates Bauteil vorhanden sein. Alternativ kann das Übertragungsmittel als Ganzes oder abschnittweise metallisch sein.

Die Flachspule 6 ist frei von einem ferromagnetischen Kern und wirkt daher als Luftspule.

In Figur 1 sind nur ein einziges zweites Führungselement 2, ein zugehöriges Übertragungsmittel 5 und eine zugeordnete Flachspule erkennbar. In der durch Figur 1 vorgegebenen Blickrichtung sind mehrere Einheiten mit jeweils einem zweiten Führungselement, einem Übertragungsmittel mit einem elektrisch leitfähigen Element und einer Flachspule hintereinander angeordnet. Das erste Führungselement 1 ist senkrecht zur Transportrichtung des Gegenstands 3 ausgerichtet. Die zweiten Führungselemente 2 sind einer Reihe nebeneinander senkrecht zur Transportrichtung angeordnet. Diese Anordnung ermöglicht eine gewisse - entsprechend des Abstandes zwischen je zwei zweiten Führungselementen 2 - laterale Auflösung, also eine Auflösung in x-Richtung. Eine solche ist von Bedeutung um eine Banknote mit einem entlang der y-Richtung auf der ganzen Länge vorhandenen Klebeband oder Klebestreifen von zwei aufeinander liegenden Banknoten zu unterscheiden. Eine Auflösung in der anderen Richtung (y) wird erwirkt, indem während des Transports des Gegenstandes zwischen den als Führungselementen 1, 2 dienenden Transportwalzen zeitaufgelöst gemessen wird.

Durch eine Bewegung des Übertragungsmittels 5 wird das elektrisch leitfähige Element 7 in der gezeichneten Ausführungsform im wesentlichen parallel zur Flachspule bewegt. Die Flachspule ist so angeordnet, dass sich deren Überdeckung - diejenige Teilfläche der Flachspulen-Fläche, welcher die metallische Komponente gegenüberliegt - durch das Element durch eine solche Bewegung ändert.

Im Betriebszustand wird jede Flachspule mit einer Wechselspannung zum Aussenden eines magnetischen Wechselfeldes angeregt. Die Frequenz beträgt zwischen 1 MHz und 10 MHz. Da die elektrisch leitfähige Komponente 7 im Einflussbereich des Wechselfeldes ist, werden in diesem Wirbelströme angeregt, welche ihrerseits das Wechselfeld und damit auch die Impedanz der Flachspule 6 beeinflussen. Der Einfluss ist um so grösser, je kleiner der Abstand zwischen Flachspule und elektrisch leitfähigem Element ist, und je grösser die Abdeckung ist, d.h. diejenige Teilfläche der Flachspulen-Fläche, welche der Komponente gegenüberliegt.

Das Funktionsprinzip der Flachspule im Zusammenspiel mit der leitfähigen Komponente entspricht demjenigen eines Transformators, wobei die Flachspule der Primärwicklung entspricht, und die Wirbelströme in der Komponente die Wirkung der Sekundärwicklung haben.

Die Flachspulen 5 können spiralartig ausgebildet oder aus konzentrischen Elementen aufgebaut sein, wobei bei konzentrischen Elementen die Stromversorgung via Durchführungen vom Leiterplatteninnern oder von der Rückseite her erfolgt. Ebenfalls auf der Leiterplatte befindet sich eine nur schematisch gezeichnete Versorgungs- und Auswerteelektronik 8. Der Abstand zwischen der Oberfläche der elektrisch leitfähigen Komponente 7 und der Leiterplatte 9 beträgt bspw. maximal 7 mm, bevorzugt weniger als 5 mm, oft weniger als 3 mm und im Optimalfall im Maximum ca. 2 mm.

Das metallische Element hat vorzugsweise eine grosse elektrische Leitfähigkeit. Es besteht bspw. im Wesentlichen aus Aluminium. Das elektrisch leitfähige Material ist nicht ferromagnetisch, sondern paramagnetisch oder diamagnetisch um Hystereseeffekte weitgehend zu vermeiden.

In **Figur 2** ist sehr schematisch dargestellt, wie eine Flachspule 6 in die elektronische Schaltung eingebunden ist. Ein Wechselspannungs-Generator 11 - im gezeichneten Beispiel erzeugt er ein Rechteck-Signal - regt über einen Widerstand 12 einen die Flachspule 6 und mindestens ein kapazitives Element 13 aufweisenden LC-Schwingkreis an. Das von einem integrierenden Verstärker 14 abgegriffene Antwort-Signal ist proportional zur Amplitude der Schwingung, welche ihrerseits abhängig ist von der Impedanz der Flachspule 6. Im Falle von digitaler Signalverarbeitung folgt wie in den folgenden Ausführungsformen auch auf den Verstärker 14 ein Analog-Digital-Wandler A/D.

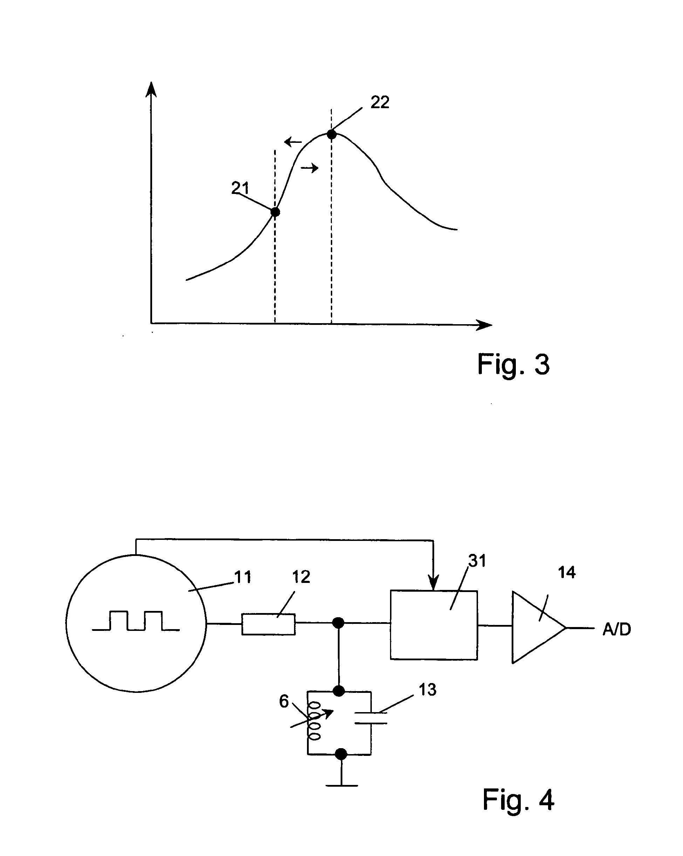

Vorzugsweise wird, wie in **Figur 3** anhand eines Signals einer einzelnen Flachspule dargestellt, der Schwingkreis nicht wie bei Distanzmessgeräten üblich in Resonanz betrieben, sondern in der bspw. niederfrequenten Flanke. In Fig. 3 sind ein bevorzugter Arbeitspunkt 21 und der Resonanzpunkt 22 hervorgehoben. Die Abhängigkeit der Amplitude A von einer Verschiebung der Resonanzkurve, ausgelöst durch eine Impedanzänderung, ist im Arbeitspunkt 21 deutlich prägnanter als am Resonanzpunkt 22. In der Figur ist der Arbeitspunkt an einer besonders steilen Stelle der Flanke in der Nähe des Resonanzpunktes 22 gezeichnet, aber im Prinzip kann der Arbeitspunkt irgendwo auf der Flanke liegen.
Die Messempfindlichkeit der Anordnung und die Unempfindlichkeit gegenüber störenden Einflüssen kann erhöht werden, wenn die Signalauswertung frequenzselektiv erfolgt. In **Figur 4** ist schematisch ein Synchrondetektor 31 dargestellt, als dessen Steuersignal das Anregungssignal verwendet wird. Die Funktionsweise von Synchrondetektoren ist an sich bekannt und soll nicht weiter erläutert werden.

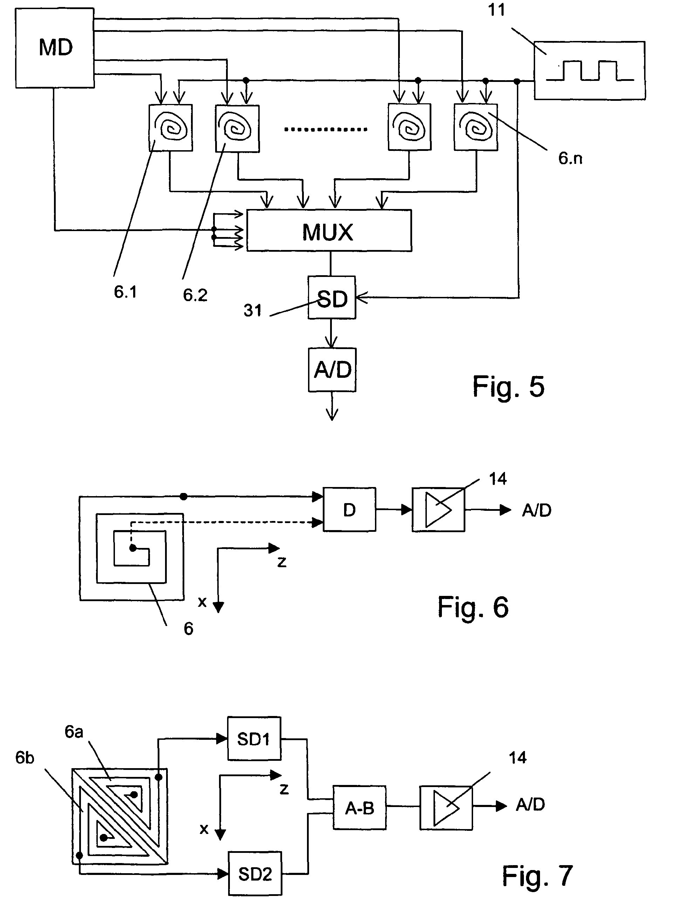

In **Figur 5** ist ein schematisches Schaltungsschema für mehrere voneinander unabhängige, nebeneinander angeordnete Flachspulen 6.1....6.n gezeigt. Die Spulen werden über den Wechselspannungsgenerator 11 angeregt. Die Antwort-Signale der Spulen gelangen in eine Multiplexeinheit MUX und von dort in einen Synchrondetektor 31. Anschliessend werden die analogen Signale zur weiteren Verwendung in einem Analog-Digitalwandler A/D in digitale Signale umgewandelt. Es ist auch möglich, die Multiplexeinheit wegzulassen, dann wird pro Spule ein Detektor benötigt.

Die Multiplexeinheit funktioniert als Zeitmultiplexer, wobei alle Flachspulen gleichzeitig angeregt werden und ungefähr die gleiche Resonanzfrequenz haben. Die Multiplex-Frequenz fₘ wird so gewählt, dass sie viel kleiner ist als die Anregungsfrequenz selbst, dass aber die Periode 1/fₘ deutlich kleiner ist als die Durchlaufzeit eines wertpapierähnlichen Gegenstandes zwischen den Führungselementen. Typischerweise liegt fₘ zwischen 1 kHz und 100 kHz. Die Multiplexeinheit MUX wird über eine Steuerungseinheit MD angesteuert. Falls nötig kann man auch die Spulen mit Zeitmultiplexing aktivieren, was in der Figur durch die Pfeile von der Steuerungseinheit zu den Spulen angedeutet wird. Dies ist bspw. dann vorteilhaft, wenn sich die Spulen bei gleichzeitigem Betrieb gegenseitig stören würden.

Alternativ ist auch ein Betrieb mit nur einem Synchrondetektor ohne Zeitmultiplexer denkbar, wenn die einzelnen Spulen eine relativ scharfe Resonanzkurve haben. Dann wird die Anregungsfrequenz des Wechselspannungsgenerators periodisch geändert und in jeder Periode jede der Spulen 6.1...6.n angeregt. Die Frequenz f_{mod} dieser Anregungsfrequenzmodulation wird ebenfalls so gewählt, dass sie viel kleiner ist als die Anregungsfrequenz selbst, dass aber die Periode 1/f_{mod} deutlich kleiner ist als die Durchlaufzeit eines wertpapierähnlichen Gegenstandes zwischen den Führungselementen. Typischerweise liegt f_{mod} zwischen 1 kHz und 100 kHz. Die Multiplex-Anordnung gemäss Figur 5 ist auch ohne Synchrondetektor denkbar.

**Figur 6** zeigt noch eine mögliche Ausgestaltung der Flachspule 6, welche hier eine rechteckige Form hat und spiralartig verläuft. Im Unterschied zu den vorstehend beschriebenen Ausführungsformen ist gemäss dem Schema von Figur 6 ein nicht notwendigerweise frequenzselektiver Amplitudendetektor D vorgesehen, auf welchen ein Verstärker und ein Analog-Digital-Wandler folgt.

In **Figur 7** ist eine Version realisiert, in welcher anstelle einer einzelnen Flachspule zwei Flachspulen vorhanden sind, welche in einer Flachspulenanordnung mit gegenläufiger Abhängigkeit der Breite, der Ausdehnung in x-Richtung, von der Auslenkungsrichtung des elektrisch leitfähigen Elementes vorliegen. In Figur 7 sieht man zwei gleich grosse, zusammen ein Viereck bildende Dreieck-Flachspulen 6a, 6b, die in die elektronische Schaltung eingebunden sind. Von den Signalen SD1, SD2 der beiden LC-Schwingkreise mit Spulen 6a, 6b wird ein Differenzsignal A-B gebildet. In der Figur ist ein Verstärker 14 nach der Differenzbildung gezeichnet; oft wird aber alternativ dazu oder ergänzend zur Verstärkung des Differenzsignals eine Signalverstärkung der Signale SD1, SD2 schon vor der Differenzbildung stattfinden. Auch die A/D-Wandlung kann vor der Differenzbildung stattfinden, wobei dann zwei A/D Wandler benötigt werden.

Durch die Differenzbildung erhöht sich die Sensitivität der Anordnung bei sich ändernder Abdeckung oder Überdeckung. Jedem zweiten Führungselement wird ein Paar von Flachspulen zugeordnet.

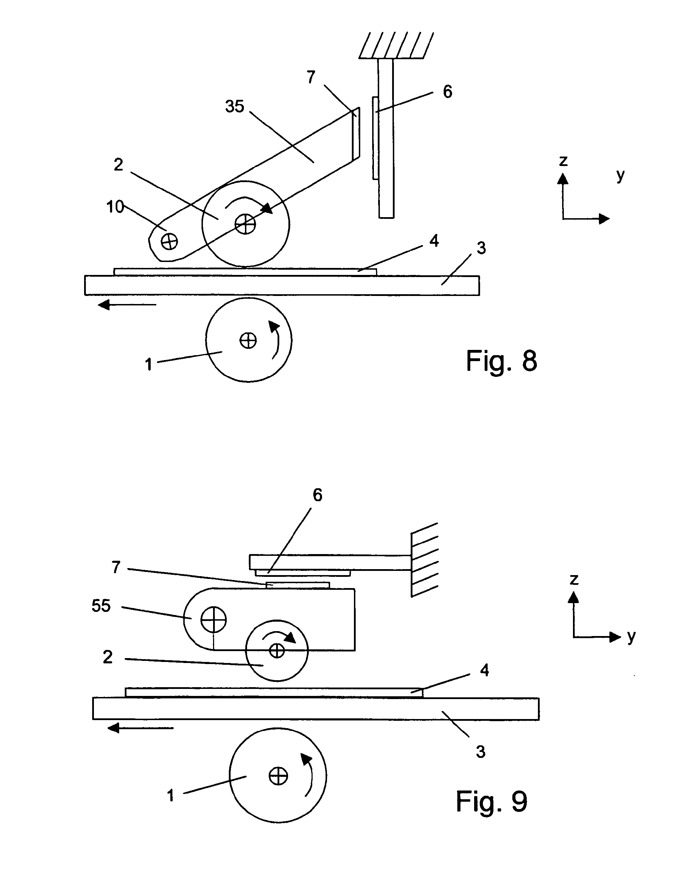

Ergänzend oder alternativ zur Anordnung gemäss Figur 1, in welcher sich durch eine Auslenkung eines Übertragungsmittels 5 die von der metallischen Komponente abgedeckte Teilfläche der Fläche der Flachspule ändert, sind weitere Anordnungen denkbar, die anhand der **Figuren 8 und 9** kurz erläutert werden.

**Figur 8** zeigt ein Ausführungsbeispiel der Erfindung, in der ein entlang einer Achse länglich gestaltetes Übertragungsmittel 35 derart mit einem der Führungselemente 2 verbunden ist, dass eine Auslenkung dieses Führungselements 2 hebelartig verstärkt wird. Das Übertragungsmittel 35 ist dabei um eine Drehachse an seinem der metallischen Komponente gegenüberliegenden Ende drehbar. Das Führungselement 2 ist in Bezug auf die Längsausdehnung des Übertragungsmittels 35 möglichst nahe an der Drehachse des Übertragungsmittels positioniert. Durch eine Auslenkung des Führungselements 2 wird das Übertragungsmittel in eine Drehbewegung von der Flachspule 6 weg bewegt. Je grösser die Auslenkung, desto grösser der Abstand zwischen metallischer Komponente 7 und Flachspule 6. Die Position der Flachspule 6 relativ zur leitfähigen Komponente 7 kann nun so gewählt werden, das bei einer Abstandsvergrösserung, d.h. Signalabnahme, gleichzeitig auch eine Abdeckung der Spule(n) verkleinert wird. Damit kann auch eine sehr kleine Auslenkung eines Führungselements 2 in ein sehr deutliches Signal übersetzt werden, welches beispielsweise auch mit einer etwas einfacheren und daher günstigeren Elektronik - möglicherweise ohne Synchrondetektor - messbar ist.

Bei dem in **Figur 9** gezeigten dritten Ausführungsbeispiel wirken die Flachspulen 6 ausschliesslich als Distanzsensor. Das elektrisch leitfähige Element 7 eines Übertragungsmittels 55 und die zugehörige Flachspule 6 sind jeweils in zueinander parallelen Ebenen angeordnet. Je nachdem ob und wie stark eines der zweiten Führungselemente 2 ausgelenkt wird, ändert sich der Abstand dieser zwei Ebenen. Durch die Änderung des Abstandes ändert sich der Einfluss der metallischen Komponente 7 auf das Wechselfeld der Flachspule 6.
Diese Anordnungen sind blosse Beispiele. Das Prinzip, dass eine Dickenvariation des flachen Gegenstandes eine Bewegung eines metallischen Elementes relativ zu einer Flachspule bewirkt, kann noch in vielen anderen Geometrien realisiert werden. Eine erfindungsgemässe Vorrichtung zum Verarbeiten von wertpapierähnlichen Gegenständen weist mindestens eine Einrichtung für die Ausführung von Verarbeitungsschritten an den wertpapierähnlichen Gegenständen auf, also beispielsweise zum Lesen, Erkennen, Kontrollieren, Verifizieren, Prüfen, Zählen, (Aus-)sortieren, Transportieren und/oder Stapeln, etc. Diese bzw. mindestens eine dieser Einrichtungen ist ein Tape-Sensor, welcher als Einrichtung der vorstehend beschriebenen Art ausgebildet ist.

## Patentansprüche

1. Einrichtung zum Feststellen einer Dicke oder Dickenvariation eines flachen Gegenstandes (3), insbesondere eines Wertscheins, aufweisend mindestens ein erstes und mehrere zweite Führungselemente (1,2), zwischen welchen der flache Gegenstand führbar ist, wobei die zweiten Führungselemente (2) dem ersten Führungselement (1) gegenüber liegen und wobei die zweiten Führungselemente (2) nebeneinander in einer Reihe angeordnet sind, so dass eine Dickenvariation des zwischen den Führungselementen (1, 2) durchlaufenden flachen Gegenstandes eine Auslenkung eines oder mehrerer der zweiten Führungselemente (2) gegenüber dem ersten Führungselement (1) bewirkt, mehrere Flachspulen (6, 6a, 6b) wobei je eine Flachspule einem zweiten Führungselement (2) zugeordnet ist, und Mittel zum Anregen der Flachspulen (6, 6a, 6b) zum Erzeugen eines magnetischen Wechselfelds, mehrere elektrisch leitfähige Elemente (7), wobei je ein zweites Führungselement (2) mit einem elektrisch leitfähigen Element (7) mittelbar oder unmittelbar starr verbunden ist und eine Auslenkung eines zweiten Führungselements (2) eine Auslenkung des zugehörigen elektrisch leitfähigen Elements (7) bewirkt, eine Auswerteelektronik (8) zum Erfassen des Einflusses der elektrisch leitfähigen Elemente (7) auf das magnetische Wechselfeld der Flachspulen (6), wobei die Flachspulen (6) als Luftspulen ausgebildet sind, wobei die elektrisch leitfähigen Elemente (7) eine flache Oberfläche aufweisen und bei einer Auslenkung eines oder mehrerer der zweiten Führungselemente das oder die zugehörigen elektrisch leitfähigen Elemente parallel zur Ebene beweglich sind, in welcher die Flachspulen (6,6a, 6b) ausgebildet sind, wobei sich die Flachspulen über eine bestimmte Fläche erstrecken und wobei die durch die flache Oberfläche abgedeckte Teilfläche dieser Fläche sich in Abhängigkeit von der Auslenkung eines zweiten Führungselements verändert.

2. Einrichtung nach Anspruch 1, wobei die elektrisch leitfähigen Elemente (7) im Bereich des Wechselfelds frei von ferromagnetischen Materialien sind.

3. Einrichtung nach Anspruch 1 oder 2, wobei die Flachspulen (6, 6a, 6b) und Ansteuer- und Auswertemittel (8) der Flachspulen (6, 6a, 6b) auf einer gemeinsamen Leiterplatte (9) ausgebildet sind.

4. Einrichtung nach einem der vorangehenden Ansprüche, wobei mehrere erste Führungselemente (1) nebeneinander angeordnet sind, und jedes erste Führungselement (1) mit einem zweiten Führungselement (2) ein Paar bildet.

5. Einrichtung nach einem der vorhergehenden Ansprüche, wobei Ansteuer- und Auswertemittel (8) eine Multiplexeinheit (MUX) beinhalten, welche derart mit mehreren der Flachspulen (6, 6a, 6b) verbunden ist, dass Signale von mehreren der Flachspulen durch eine einzige Detektionseinheit detektierbar sind.

6. Einrichtung nach einem der vorangehenden Ansprüche, wobei Ansteuer- und Auswertemittel (8) einen Synchrondetektor (SD) beinhalten.

7. Einrichtung nach einem der vorangehenden Ansprüche, wobei Ansteuer- und Auswertemittel (8) der Flachspulen (6, 6a, 6b) Mittel zum Erzeugen eines periodischen Anregungssignals (11) aufweisen, wobei je eine Flachspule und ein kapazitives Element (13) Teile eines LC-Schwingkreises sind, und die
Mittel zum Erzeugen des periodischen Anregungssignals so ausgebildet oder programmiert sind, dass die Frequenz des Anregungssignals kleiner ist als die Resonanzfrequenz der LC-Schwingkreise.

8. Einrichtung nach einem der vorangehenden Ansprüche, wobei die zweiten Führungselemente (2) an Übertragungsmitteln (5,35,55) angeordnet sind, und wobei die elektrisch leitfähigen Elemente an den Übertragungsmitteln (5, 35, 55) angeordnet sind, derart, dass eine Auslenkung eines zweiten Führungselementes (2) via dem Übertragungsmittel in eine Bewegung des zugehörigen leitfähigen Elementes (7) relativ zur zugeordneten Flachspule (6, 6a, 6b) übertragbar ist, wobei die Übertragungsmittel (5, 35, 55) derart ausgestaltet sind, dass damit eine Auslenkung eines zweiten Führungselements (2) in eine proportional vergrösserte und/oder in der Richtung veränderte Bewegung des zugehörigen elektrisch leitfähigen Elementes übertragbar ist.

9. Einrichtung nach einem der vorangehenden Ansprüche, wobei:
- zwei in derselben Ebene angeordnete Flachspulen (6a, 6b) einem elektrisch leitfähigen Element zugeordnet sind,
- die Ansteuer- und Auswertemittel zum Bilden eines Differenzsignals (A-B) von Einzelsignalen der beiden Flachspulen ausgebildet sind, - in der durch die Flachspulen definierten Ebene eine erste Richtung (z) im wesentlichen parallel zur Auslenkung eines zweiten Führungselements, und eine zur ersten Richtung senkrechte zweite Richtung (x) definiert sind,
- und die Ausdehnung der einen Flachspule (6a) in der ersten Richtung (z) in Funktion der Position entlang der zweiten Richtung (x) monoton grösser oder monoton kleiner wird und die Ausdehnung der anderen Flachspule (6b) in der ersten Richtung (z) als Funktion der Position entlang der zweiten Richtung (x) einen zur ersten Flachspule qualitativ umgekehrten Verlauf aufweist.

10. Einrichtung nach einem der vorangehenden Ansprüche, wobei der minimale Abstand zwischen einer Ebene, in weicher eine der Flachspulen (6, 6a, 6b) ausgebildet ist, und dem zugeordneten elektrisch leitfahigen Element (7) höchstens 7 mm beträgt.

11. Einrichtung nach einem der vorangehenden Ansprüche, wobei durch eine Auslenkung eines zweiten Führungselements (2) relativ zum ersten Führungselement (1) der Abstand zwischen dem zugehörigen elektrisch leitfähigen Element (7) und der zugehörigen Flachspule (6, 6a, 6b) verändert wird.

12. Vorrichtung zur Verarbeitung wertpapierähnlicher Gegenstände mit einem als Einrichtung nach einem der vorangehenden Ansprüche ausgestalteten Tape-Sensor und/ oder Mehrfacheinzugs-Detektor.

## Claims

1. Arrangement for determining thicknesses and thickness variations of a flat object (3), in particular a security, having at least a first and a plurality of second guide elements (1, 2) between which the flat object can be conveyed, whereby the second guide elements (2) are located opposite the first guide element (1) and whereby the second guide elements (2) are arranged next to one another in a row so that a variation in the thickness of the flat object that is passing between the guide elements (1, 2) causes a deflection of one or more of the second guide elements (2) from the first guide element (1), a plurality of flat coils (6, 6a, 6b) whereby each flat coil is assigned to a second guide element (2), and a means for energizing the flat coils (6, 6a, 6b) to generate a magnetic alternating field, a plurality of electrically conductive elements (7), whereby each second guide element (2) is either indirectly or directly rigidly attached to an electrically conductive element (7) and a deflection of a second guide element (2) causes a deflection of the associated electrically conductive element (7), an electronic evaluation circuit (8) for detecting the influence of the electrically conductive element (7) upon the magnetic alternating field of the flat coils (6), whereby the flat coils (6) are in the form of an air core,
whereby the electrically conductive elements (7) have a flat surface and during a deflection of one or more of the second guide elements the associated electrically conducting element(s) can be moved parallel to the plane in which the flat coils (6, 6a, 6b) are formed, whereby the flat coils extend across a certain surface area and whereby the partial area of this surface that is overlapped by the flat surface changes as a function of the deflection of a second guide element.

2. Arrangement according to claim 1, whereby the electrically conductive elements (7) in the area of the alternating field do not contain any ferromagnetic materials.

3. Arrangement according to claim 1 or 2, whereby the flat coils (6, 6a, 6b) and the means (8) of controlling and evaluating the flat coils (6, 6a, 6b) are formed on a common printed circuit board (9).

4. Arrangement according to one of the preceding claims, whereby a plurality of first guide elements (1) are arranged next to one another and each first guide element (1) forms a pair with a second guide element (2).

5. Arrangement according to one of the preceding claims, whereby the control and evaluation means (8) contain a multiplex unit (MUX) which is connected with two or more of the flat coils (6, 6a, 6b) such that signals from two or more of the flat coils can be detected by a single detection unit.

6. Arrangement according to one of the preceding claims, whereby control and evaluation means (8) contain a synchronous detector (SD).

7. Arrangement according to one of the preceding claims, whereby control and evaluation means (8) of the flat coils (6, 6a, 6b) have a means of generating a periodic energizing signal (11), whereby a flat coil and a capacitive element (13) are parts of an LC oscillating circuit, and the means for generating the periodic energizing signal is designed or programmed such that the frequency of the energizing signal is lower than the resonance frequency of the LC oscillating circuits.

8. Arrangement according to one of the preceding claims, whereby the second guide elements (2) are mounted on transmission means (5, 35, 55), and whereby the electrically conductive elements are mounted on the transmission means (5, 35, 55) such that a deflection of a second guide element (2) can be converted via the transmission means into a movement of the associated conductive element (7) relative to the associated flat coil (6, 6a, 6b), whereby the transmission means (5, 35, 55) are realized such that a deflection of a second guide element (2) can thereby be converted into a movement of the associated electrically conductive element that is proportionally increased and/or is in a changed direction.

9. Arrangement according to one of the preceding claims, whereby:
- two of the flat coils (6a, 6b) that are mounted on the same plane are associated with an electrically conductive element,
- the control and evaluation means are realized so that they form a differential signal (A-B) from individual signals coming from the two flat coils
- in the plane defined by the flat coils a first direction (z) is defined essentially parallel to the deflection of a second guide element and a second direction (x) is defined perpendicular to the first direction,
- the dimension of the one flat coil (6a) in the first direction (z) becomes monotonically greater or monotonically less as a function of the position along the second direction (x), and the dimension of the other flat coil (6b) in the first direction (z) follows a curve that is qualitatively inverse to that of the first flat coil as a function of the position along the second direction (x).

10. Arrangement according to one of the preceding claims, whereby the minimal distance between a plane in which one of the flat coils (6, 6a, 6b) is formed and the associated electrically conductive element (7) is no greater than 7 mm.

11. Arrangement according to one of the preceding claims, whereby the distance between the associated electrically conductive element (7) and the associated flat coil (6, 6a, 6b) is varied by a deflection of a second guide element (2) from the first guide element (1).

12. Device for processing items similar to securities with a tape sensor and/or multiple insertion detector that is designed in the form of an arrangement according to one of the preceding claims

## Revendications

1. Dispositif de contrôle d'épaisseurs et de variations d'épaisseurs d'un objet plat (3), en particulier d'un coupon, présentant au minimum un premier et plusieurs deuxièmes éléments de guidage (1, 2) entre lesquels l'objet plat peut se déplacer, les deuxièmes éléments de guidage (2) se trouvant en face du premier élément de guidage (1) et étant disposés l'un à côté de l'autre sur une même ligne, si bien que toute variation d'épaisseur de l'objet plat qui se déplace entre les éléments de guidage (1, 2) entraîne une déviation d'un ou de plusieurs des deuxièmes éléments de guidage (2) par rapport au premier élément de guidage (1), plusieurs bobines plates (6, 6a, 6b), une bobine plate étant respectivement affectée à un deuxième élément de guidage (2), et des organes servant à l'excitation des bobines plates (6, 6a, 6b) pour engendrer un champ alternatif magnétique, plusieurs éléments électriques conducteurs (7), chaque deuxième élément de guidage (2) étant relié de façon rigide, indirectement ou directement, à un élément électrique conducteur (7) de sorte qu'une déviation d'un deuxième élément de guidage (2) engendre une déviation de l'élément électrique conducteur (7) affecté, une électronique d'évaluation (8) pour la saisie de l'influence des éléments électriques conducteurs (7) sur le champ alternatif magnétique des bobines plates (6), les bobines plates (6) étant conçues comme bobines à air,
les éléments électriques conducteurs (7) présentant une surface plane et, en cas de déviation d'un ou de plusieurs des deuxièmes éléments de guidage, le ou les éléments électriques conducteurs affectés se déplaçant parallèlement au plan que constituent les bobines plates (6, 6a, 6b), les bobines plates s'étendant sur une surface déterminée et la partie de cette surface recouverte par la surface plane variant en fonction de la déviation d'un deuxième élément de guidage.

2. Dispositif selon la revendication 1, les éléments électriques conducteurs (7) se trouvant dans la zone du champ alternatif étant exempts de matériaux ferromagnétiques.

3. Dispositif selon la revendication 1 ou 2, les bobines plates (6, 6a, 6b) et les organes d'amorçage et d'évaluation (8) des bobines plates (6, 6a, 6b) se trouvant sur un circuit imprimé commun (9).

4. Dispositif selon l'une quelconque des revendications précédentes, plusieurs premiers éléments de guidage (1) étant agencés les uns à côté des autres et chaque premier élément de guidage (1) constituant un couple avec un deuxième élément de guidage (2).

5. Dispositif selon l'une quelconque des revendications précédentes, les organes d'amorçage et d'évaluation (8) comportant une unité multiplex (MUX) qui est reliée à plusieurs des bobines plates (6, 6a, 6b) de telle façon que des signaux émanant de plusieurs des bobines plates puissent être détectés par une seule et unique unité de détection.

6. Dispositif selon l'une quelconque des revendications précédentes, les organes d'amorçage et d'évaluation (8) comportant un détecteur de synchronisation (SD).

7. Dispositif selon l'une quelconque des revendications précédentes, les organes d'amorçage et d'évaluation (8) des bobines plates (6, 6a, 6b) présentant des organes destinés à engendrer un signal d'excitation périodique (11), une bobine plate et un élément capacitif (13) faisant respectivement partie intégrante d'un circuit oscillant LC et les organes destinés à engendrer le signal d'excitation périodique étant conçus ou programmés de sorte que la fréquence du signal d'excitation soit inférieure à la fréquence de résonance des circuits oscillants LC.

8. Dispositif selon l'une quelconque des revendications précédentes, les deuxièmes éléments de guidage (2) étant agencés sur des organes de transmission (5, 35, 55) et les éléments électriques conducteurs étant agencés sur ces organes de transmission (5, 35, 55) de telle manière qu'une déviation d'un deuxième élément de guidage (2) se traduise via l'organe de transmission par un mouvement de l'élément conducteur respectif (7) par rapport à la bobine plate (6, 6a, 6b) qui lui est affectée, les organes de transmission (5, 35, 55) étant conçus de telle manière qu'une déviation d'un deuxième élément de guidage (2) se traduise par un mouvement proportionnellement augmenté et/ou un mouvement changeant de direction de l'élément électrique conducteur respectif.

9. Dispositif selon l'une quelconque des revendications précédentes, **caractérisé en ce que**:
- deux bobines plates (6a, 6b) agencées sur le même plan sont affectées à un élément électrique conducteur,
- les organes d'amorçage et d'évaluation pour la création d'un signal différentiel (A-B) sont constitués par les signaux individuels des deux bobines plates,
- sur le plan défini par les deux bobines plates, une première direction (z) est définie pour l'essentiel parallèlement à la déviation d'un deuxième élément de guidage et une deuxième direction (x) est définie perpendiculairement à la première direction,
- l'extension de l'une des bobines plates (6a) dans la première direction (z) en fonction de la position le long de la deuxième direction (x) augmente de façon monotone ou diminue de façon monotone et l'extension de l'autre bobine plate (6b) dans la première direction (z), en tant que fonction de la position le long de la deuxième direction (x), présente une courbe qualitativement inversée par rapport à la première bobine plate.

10. Dispositif selon l'une quelconque des revendications précédentes, la distance minimale entre un plan qui est constitué par l'une des bobines plates (6, 6a, 6b) et l'élément électrique conducteur respectif (7) étant au maximum de 7 mm.

11. Dispositif selon l'une quelconque des revendications précédentes, une déviation d'un deuxième élément de guidage (2) par rapport au premier élément de guidage (1) modifiant la distance entre l'élément électrique conducteur respectif (7) et la bobine plate respective (6, 6a, 6b).

12. Dispositif servant au traitement d'objets similaires à des coupons, présentant une bande capteur et/ou un détecteur d'introductions multiples conçu en tant que dispositif selon l'une quelconque des revendications précitées.
